# EUROPÄISCHE PATENTSCHRIFT

(11) **EP 2 987 434 B1**
(45) Veröffentlichungstag und Bekanntmachung des Hinweises auf die Patenterteilung: **26.12.2018**
(21) Anmeldenummer: 15171601.6
(22) Anmeldetag: 11.06.2015
(51) Int. Cl.: A47J 31/44

(54) **MILCHERWÄRMUNGS- UND/ODER MILCHAUFSCHÄUMVORRICHTUNG SOWIE GETRÄNKEZUBEREITUNGSVORRICHTUNG**
MILK HEATING AND/OR MILK FOAMING DEVICE AND BEVERAGE PREPARATION DEVICE
DISPOSITIF PERMETTANT DE FAIRE MOUSSER ET/ OU CHAUFFER LE LAIT ET DISPOSITIF DE PRÉPARATION DE BOISSONS

(30) Priorität: 18.08.2014 DE 102014111761
(43) Veröffentlichungstag der Anmeldung: 24.02.2016
(73) Patentinhaber: Eugster/Frismag AG, 8580 Amriswil (CH)
(72) Erfinder: Wäger, Simon, 8530 Amriswil (CH); Riessbeck, Wolfgang, 8597 Landschlacht (CH)
(74) Vertreter: Patentanwälte Behrmann Wagner PartG mbB

(56) Entgegenhaltungen:
- EP-A1- 2 236 061
- DE-U1-202011 107 306

## Beschreibung

Die Erfindung betrifft eine Milcherwärmungs- und/oder Milchaufschäumvorrichtung gemäß dem Oberbegriff des Anspruchs 1, insbesondere mit einer Kaffeemaschine, umfassend eine Milchleitung zum Fördern von zu erwärmender und/oder aufzuschäumender Milch zu Aufschäum- und/oder Erwärmungsmitteln der Vorrichtung, wobei der Milchleitung ein einen verstellbaren Ventilkörper aufweisendes Ventil zur Einstellung des Durchflussvolumenstroms zugeordnet ist, wobei der Ventilkörper eine Grifffläche zum manuellen Verstellen, vorzugsweise durch Verdrehen um seine Längsachse, aufweist und/oder mit einem elektromotorischen Antrieb zum automatischen Verstellen des Ventilkörpers, vorzugsweise durch Verdrehen um seine Längsachse, gekoppelt oder mit einem solchen Antrieb der Getränkezubereitungsvorrichtung koppelbar ist. Ferner betrifft die Erfindung eine Getränkezubereitungsvorrichtung gemäß Anspruch 15 mit einer solchen Milcherwärmungs- und/oder Milchaufschäumvorrichtung.

Milcherwärmungs- und/oder Milchaufschäumvorrichtungen als Bestanteil von Getränkezubereitungsvorrichtungen sind hinlänglich bekannt. Gemeinsam ist derartigen Vorrichtungen, dass Milch über eine Milchleitung angesaugt und dann erwärmt und/oder aufgeschäumt wird. Üblicherweise erfolgt das Ansaugen mittels Unterdruck, welcher wiederum mit Hilfe von durch eine Venturi-Düse strömendem Dampf erzeugt wird. Der Dampf wird der Milch zugeführt und erwärmt diese. Falls in die Milchleitung Luft über eine Luftleitung zugeführt wird, wird die Milch durch Zugabe des Dampfes nicht nur erwärmt sondern gleichzeitig aufgeschäumt.

Bei den bekannten Milcherwärmungs- und/oder Milchaufschäumvorrichtungen wird die Milchtemperatur über die Einstellung des Durchflussvolumenstroms durch die Milchleitung beeinflusst. Für eine automatisierte Einstellung des Durchflussvolumenstroms hat die Anmelderin eine in der EP 2 730 201 A1 beschriebene, robuste Lösung vorgeschlagen, wobei hier das Ventil zur Einstellung des Durchflussvolumenstroms der Milch als Quetschventil ausgebildet und in vorteilhafter Weise über eine Schwenkhebelmimik betätigbar ist.

Eine der ersten Lösungen zur Durchflussvolumenstromeinstellung ist in der EP 0 813 834 B1 beschrieben. Auch hier ist das Ventil zur Einstellung des Volumenstroms als Quetschventil ausgebildet, wobei das Ventil eine manuell betätigbare Schraube zur Variation des freien Durchflussquerschnittes eines flexiblen Milchschlauches aufweist.

In der EP 2 099 341 B1 ist eine automatisierte Lösung beschrieben, wobei hier ein Exzenterantrieb wechselweise mit zwei flexiblen Schläuchen zusammenwirkt.

Aus der DE 101 22 983 A1 ist ein als Rückschlagventil ausgebildetes, nicht manuell und nicht elektromotorisch betätigbares Drosselventil bekannt, dessen Ventilkörper in Abhängigkeit des Volumenstroms selbsttätig entgegen der Kraft einer Druckfeder verstellt wird. Der Ventilkörper weist am Ende eines zentrischen Durchflusskanals eine Drosselöffnung mit einem definierten Querschnitt auf. Die Feder drückt den Ventilkörper gegen eine Einströmdüse, wodurch das vordere Ende des Ventilkörpers von einer Gehäusedichtfläche entfernt ist, mit der Folge, dass die Milch sowohl durch das Innere des Ventilkörpers, also durch die vorerwähnte Drosselöffnung strömt als auch entlang des Außenumfangs des Ventilkörpers. Die Drosselwirkung ist bezogen auf die geförderte baut die Pumpe einen stärkeren Unterdruck (Saugdruck) in der Milchleitung auf, wodurch der Ventilkörper entgegen der Federkraft der Druckfeder verstellt wird, bis er an der Gehäusedichtfläche anliegt. Das bekannte Ventil weist ausschließlich zwei stabile Betriebszustände auf, nämlich mit vollständig geöffnetem oder vollständig geschlossenem Bypass. Eine Variation des Bypassleitungsquerschnittes ist mit der bekannten Ventilanordnung nicht möglich, erst recht nicht durch manuelle oder elektromagnetische Betätigung.

Die DE 10 2011 102 734 A1 beschreibt eine Getränkezubereitungsvorrichtung, bei welcher eine eine Pumpe umfassende Hauptströmungsleitung mittels eines Bypasses (Bezugszeichen 15) gebypasst werden kann. Hierzu ist der Bypassleitung beispielsweise ein Schlauchklemmventil zugeordnet, mit welchem die Milch wahlweise entweder ausschließlich über die Bypassleitung oder ausschließlich über die Hauptleitung förderbar ist. Eine Variation des Strömungsquerschnittes der Bypassleitung ist nicht möglich. Die Milch strömt entweder über die Hauptleitung oder über die Bypassleitung, zu keinem Zeitpunkt jedoch durch beide Leitungen.

Zum weiteren Stand der Technik wird die DE 10 2009 001 752 A1 genannt.

In der EP 2 236 061 A1 wird ein Getränkeautomat, insbesondere ein Kaffeevollautomat beschrieben, der über ein Milchaufschäumvorrichtung verfügt, an dem ein Drehelement angeordnet ist, über das die Auswahl zwischen warmer Milch oder Milchschaum erfolgt. Das Drehelement kann in zwei Positionen gedreht werden, wodurch entweder ein großer Durchlasskanal oder alternativ ein kleiner Durchlasskanal mit der Milcherwärmungs- bzw. Milchaufschäumkammer fest verbunden wird. Ist der kleine Durchlasskanal in den Hauptpfad geschaltet und kann von Milch durchflossen werden, wird durch die konstruktive Ausgestaltung des Drehelements über einen Verbindungskanal zusätzlich ein Luftzuführkanal fest mit der Milchaufschäumkammer verbunden. Dies ermöglicht die Ausgabe von Milchschaum. Für die Ausgabe von warmer Milch wird der große Durchlasskanal genutzt. In beiden Positionen gibt es also einen Leerleitungs- bzw. Blindleitungsabschnitt der nicht im Hauptpfad angeordnet ist und nicht von der Milch durchflossen wird. Eine Zwischenposition des Schalters ist nicht vorgesehen.

Der Austausch des kleinen Durchlasskanals mit dem großen Durchlasskanal hat zur Folge, dass bei einem Spülvorgang der Milchaufschäumvorrichtung auch immer nur einer der beiden Teilabschnitte von Wasser gereinigt wird. Somit erfolgt in dem Teilabschnitt, der als Blindleitungsabschnitt ausgeführt ist, keine Reinigung durch das Spülwasser. Außerdem besteht bei der bekannten Milchaufschäumvorrichtung keine Möglichkeit, die Milchtemperatur oder das Milch-Luftverhältnis zu variieren.

In der DE 20 2011 107 306 U1 wird eine Kaffeemaschine, die eine Milchaufschäumvorrichtung umfasst, beschrieben. Die Milchschäumvorrichtung kann durch das Einleiten von Wasser oder Wasserdampf in die Unterdruckkammer unter Zuhilfenahme eines Auslassreduzierventils gespült werden. Die Auswahl zwischen normalem Getränkebezug oder einer Spülfunktion erfolgt über einen Schalter, über den das Auslassreduzierventil gesteuert wird. Das Ventil hat zwei Stellungen, entweder ein direkter Durchlass ohne Durchlassreduzierung oder eine Stellung, bei der der Volumendurchlass reduziert wird.

Der Spülvorgang beruht auf einem Austausch eines Teilabschnitts des Hauptpfads. Befindet sich das Auslassreduzierventil in der Spülstellung werden zwar die Komponenten die dem Auslassredzierventil vorgeordnet sind gespült, allerdings erfolgt keine Reinigung des Teilabschnitts des Auslassreduzierventils, das im Normalbetrieb von Milch durchflossen wird.

Auch muss bei diesem Verfahren sichergestellt sein, dass während des Spülvorgangs der Milchbehälter gegen einen Auffangbehälter für das Spülwasser ausgetauscht wurde. Wird dies versäumt, fließt das Spülwasser in den angeschlossenen Frischmilchbehälter.

Ausgehend von dem vorgenannten Stand der Technik liegt der Erfindung die Aufgabe zugrunde, eine verbesserte Milcherwärmungs- und/oder Milchaufschäumvorrichtung anzugeben, bei welcher eine besonders robuste, gut zu reinigende und möglichst wenig Einzelteile umfassende Möglichkeit zur Einstellung des Durchflussvolumenstroms der angesaugten Milch realisiert ist. Dabei sollen bevorzugt Materialermüdungseffekte, wie sie durch häufiges Quetschen eines Milchschlauchs auftreten könnenvermieden werden. Ferner besteht die Aufgabe darin, eine mit einer solchen Milcherwärmungs- und/oder Milchaufschäumvorrichtung ausgestattete Getränkezubereitungsvorrichtung, insbesondere Kaffeemaschine anzugeben.
Diese Aufgabe wird hinsichtlich der Milcherwärmungs- und/oder Milchaufschäumvorrichtung mit den Merkmalen des Anspruchs 1 gelöst, d.h. bei einer gattungsgemäßen Vorrichtung dadurch, dass die Milchleitung zumindest abschnittsweise unterteilt ist in einen Hauptleitungsabschnitt und einen Bypassleitungsabschnitt zum Bypassen des Hauptleitungsabschnittes, und dass das Ventil dem Bypassleitungsabschnitt zugeordnet ist, derart, dass mit diesem durch manuelles oder elektromotorisches Verstellen des Ventilkörpers der Durchflussvolumenstrom durch den Bypassleitungsabschnitt zur Einstellung eines Volumenstromverhältnisses zwischen einem durch den Bypassleitungsabschnitt strömenden Teil-Milchvolumenstrom und einem durch den Hauptleitungsabschnitt (19) fließenden Teil-Milchvolumenstrom einstellbar ist.
Hinsichtlich der Getränkezubereitungsvorrichtung wird die Aufgabe mit den Merkmalen des Anspruchs 15 gelöst.
Vorteilhafte Weiterbildungen der Erfindung sind in den Unteransprüchen angegeben. Im Rahmen der Erfindung fallen sämtliche Kombinationen aus zumindest zwei von in der Beschreibung, den Ansprüchen und/oder Figuren offenbarten Merkmalen.

Der Erfindung liegt der Gedanke zugrunde, den Gesamtmilchfluss, d.h. den Gesamtmilchvolumenstrom durch die Milchleitung durch Einstellung des Volumenstromverhältnisses zwischen einer durch einen Bypassleitungsabschnitt fließenden Teil-Milchvolumenstrom zu einem durch einen Hauptleitungsabschnitt fließenden Teil-Milchvolumenstrom einzustellen durch Realisierung eines Bypassventils, mit welchem ein Hauptleitungsabschnitt im Bedarfsfall bypassbar ist. Anders ausgedrückt ist die Milchleitung abschnittsweise aufgeteilt bzw. wird gebildet von einem Hauptleitungsabschnitt und einem fluidmäßig dazu parallelen Bypassleitungsabschnitt, wobei mittels des Ventils, genauer durch manuelles oder elektromotorisches Verstellen eines Ventilkörpers des Ventils der Durchfluss durch den Bypassleitungsabschnitt einstellbar ist. Wesentlich ist, dass beide Teil-Milchvolumenströme entweder separat voneinander oder wieder zusammengeführt als Gesamtmilchvolumenstrom zu den Aufschäum- und/oder Erwärmungsmitteln geführt sind, insbesondere in eine später noch zu erläuternde Unterdruckkammer dieser Mittel. Von der Erfindung mit erfasst werden soll auch eine Ausführungsform, bei der durch eine entsprechende Ventilstellung des Ventils der Teil-Milchvolumenstrom durch den Bypassleitungsabschnitt null ist, d.h. dass mittels des Ventils dieser Durchfluss zeitweise vollständig gesperrt ist.

Besonders bevorzugt ist eine Ausführungsform, bei welcher der Bypassleitungsabschnitt und der Hauptleitungsabschnitt, insbesondere in einem in Strömungsrichtung hinteren Ende des Ventils oder alternativ nach dem Ventil vor Erreichen der Aufschäum- und/oder Erwärmungsmittel wieder zusammengeführt werden, sodass Letztere durch einen einzigen gemeinsamen Milchleitungsabschnitt bzw. über einen einzigen Milchanschluss mit Milch versorgt werden. Alternativ ist es möglich, den Bypassleitungsabschnitt und den Hauptleitungsabschnitt bis zu den Aufschäum- und/oder Erwärmungsmitteln parallel zu führen und beide Leitungsabschnitte für sich, d.h. benachbart zueinander in die Aufschäum- und/oder Erwärmungsmittel münden zu lassen. Ganz besonders bevorzugt ist eine später noch zu erläuternde Ausführungsform der Erfindung, bei der das Ventil ausschließlich mit dem Bypassleitungsabschnitt unmittelbar zusammenwirkt, d.h. den Durchflussquerschnitt des Hauptleitungsabschnittes nicht beeinflusst sondern dieser unabhängig von der Ventilstellung zur Einstellung des Durchflussvolumenstroms durch den Bypassleitungsabschnitt dauerhaft geöffnet ist, sodass durch Öffnen des Bypassleitungsabschnittes und/oder Vergrößern des freien Strömungsquerschnittes des Bypassleitungsabschnittes, mittels des Ventils ein zusätzlicher Volumenstrom in die Aufschäum- und/oder Erwärmungsmittel förderbar ist. Dabei sind bevorzugt unterschiedliche freie Strömungsquerschnitte (Zwischenstellungen) zwischen einem maximal und minimal einstellbaren Strömungsquerschnitt einstellbar.

Die Begriffswahl Hauptleitungsabschnitt und Bypassleitungsabschnitt ist zunächst unabhängig von der Größe des jeweils freien maximalen Strömungsquerschnittes. So sind alle folgenden Ausführungsformen realisierbar, bei deren der freie Strömungsquerschnitt des Hauptleitungsabschnittes größer, gleich oder kleiner ist als bzw. wie der maximale freie Strömungsquerschnitt des Bypassleitungsabschnittes.

Die erfindungsgemäße Vorrichtung ist konstruktiv besonders robust und gut reinigbar, da das Ventil einen verstellbaren, insbesondere rotierbaren, noch weiter bevorzugt um seine Längsachse rotierbaren, abschnittsweise die Milchleitung, insbesondere deren Versorgungsleitungsabschnitt, begrenzenden Ventilkörper aufweist, durch dessen Verstellen, insbesondere Rotieren, der Bypassleitungsabschnitt fluidleitend mit dem Versorgungsabschnitt verbindbar und/oder ein Durchflussquerschnitt zur Versorgung des Bypassleitungsabschnittes mit Milch aus dem Versorgungsleitungsabschnitt stufenlos oder gestuft veränderbar ist.

Erfindungsgemäß ist weiter vorgesehen, dass der mehrteilige oder bevorzugt einteilige, ganz besonders bevorzugt als Kunststoffspritzgussteil ausgebildete Ventilkörper eine Grifffläche zum manuellen Verstellen, vorzugsweise durch Verdrehen um seine Längsachse, aufweist, wobei es besonders bevorzugt ist, wenn eine entsprechende Grifffläche als Ringfläche ausgebildet ist, die bevorzugt konzentrisch zu einem Kanal innerhalb des Ventilkörpers angeordnet ist. Zusätzlich oder alternativ kann ein bevorzugt, wie zuvor beschrieben, ausgebildeter Ventilkörper mit einem elektromotorischen Antrieb zum automatischen Verstellen, insbesondere Rotieren des Ventilkörpers gekoppelt sein oder mit einem solchen, dann bevorzugt getränkezubereitungsvorrichtungsseitigen Antrieb koppelbar sein. Hierdurch kann das Volumenstromverhältnis nutzerseitig stufenlos oder in Stufen durch unmittelbare manuelle Betätigung des Ventilkörpers oder elektromotorisches Antreiben bzw. Verstellen des Ventilkörpers eingestellt werden, wobei bevorzugt eine Vielzahl mehr als drei, oder mehr als vier unterschiedliche Volumenstromverhältnisse einstellbar sind. Bevorzugt weist das Bypassventil eine Vielzahl von mehr als zwei, bevorzugt mehr als drei stabile unterschiedliche Betriebszustände mit jeweils unterschiedlichen Strömungsverhältnissen der Teilvolumenströme durch den Hauptleitungsabschnitt und den Bypassabschnitt auf.

Die zuvor beschriebene, erfindungsgemäße Lösung zur Einstellung des Gesamt-Durchflussvolumenstroms durch Beeinflussung des Durchflussvolumenstromverhältnisses des durch einen Bypassleitungsabschnitt strömenden Teilvolumenstrom zu einem durch einen Hauptleitungsabschnitt strömenden Teilvolumenstrom ist konstruktiv mit wenigen Bauteilen realisierbar und, insbesondere bei entnehmbarer bzw. abziehbarer Anordnung eines Ventilkörpers einfach und effektiv reinigbar. Zudem kann auf eine Quetschvorrichtung verzichtet werden, wodurch Milcherwärmungseffekte vermieden werden.

Besonders bevorzugt ist eine Ausführungsform der Erfindung, bei der in Strömungsrichtung der Milch vor dem Hauptleitungsabschnitt und dem mindestens einen, vorzugsweise ausschließlich einen Bypassleitungsabschnitt ein (gemeinsamer) Versorgungsleitungsabschnitt vorgesehen ist, der sich in die vorgenannten Teilabschnitte (Hauptleitungsabschnitt und Bypassleitungsabschnitt) gabelt, wobei es noch weiter bevorzugt ist, wenn dieser Versorgungsleitungsabschnitt zumindest abschnittsweise von einem flexiblen Milchschlauch (Ansaugschlauch) gebildet ist.

Wie eingangs bereits erwähnt ist eine Ausführungsform besonders bevorzugt, bei der der Hauptleitungsquerschnitt dauerhaft geöffnet ist und/oder der Hauptleitungsquerschnitt, d.h. die Hauptleitungsquerschnittsfläche nicht durch Betätigen des Ventils schließbar und/oder durchflussquerschnittsveränderbar ist. Zwar hat bei angenommener gleicher Saugleistung die Variation des Durchflussquerschnittes der Bypassleitung mittelbar auch Einfluss auf den Durchflussvolumenstrom eines unveränderlichen Durchflussquerschnittes des Hauptleitungsabschnittes - dieser Effekt soll jedoch hier vernachlässigt werden. Gemäß der bevorzugten Ausführungsvariante hat jedenfalls das Ventil keine unmittelbare mechanische bzw. einstellende Einwirkung auf den freien Querschnitt des Hauptleitungsabschnittes, wodurch sich insgesamt ein vergleichsweise einfach und gut reinigbares Bypassventil ergibt.

Besonders bevorzugt ist eine Ausführungsform der Milcherwärmungs- und/oder Aufschäumvorrichtung, bei der der Strömungsquerschnitt des Hauptleitungsabschnittes, insbesondere an einem von dem Bypassleitungsabschnitt gebypassten, d.h. umgangenen, Verengungsabschnitt enger ist als der Strömungsquerschnitt des Versorgungsleitungsabschnittes an seiner engsten Stelle, d.h. eine geringere freie Querschnittsfläche aufweist als der minimale Strömungsquerschnitt des sowohl den Hauptleitungsabschnitt als auch den Bypassleitungsabschnitt versorgende Versorgungsleitungsabschnitt. Mit anderen Worten ist der Hauptleitungsabschnitt bevorzugt so dimensioniert, dass er in Bezug auf den Versorgungsleitungsabschnitt, zumindest bei geschlossenem oder querschnittsreduziertem Bypassleitungsabschnitt eine Drosselfunktion ausübt.

Zweckmäßig ist es, wenn der Ventilkörper zwischen einer Öffnungsstellung, in der Milch unter Umgehung des Hauptleitungsabschnittes durch den Bypassleitungsabschnitt strömen kann und eine Schließstellung, in der der Strömungsweg über den Bypassleitungsabschnitt unterbrochen ist, verstellbar ist. Zusätzlich oder alternativ kann der Ventilkörper zwischen einer ersten Schaltstellung und einer zweiten Schaltstellung verstellbar sein, wobei der freie Strömungsquerschnitt durch den und hin zu dem Bypassleitungsabschnitt in der ersten Stellung größer ist als in der zweiten Ventilkörperstellung.

Besonders zweckmäßig ist es dabei, wenn sich die Längsachse des Ventilkörpers in der Hauptströmungsrichtung der Milch durch den Hauptleitungsquerschnitt erstreckt. Ganz besonders bevorzugt ist es, wenn der Ventilkörper, insbesondere mit daran angedocktem Saug-Schlauch, von einem ortsfest angeordneten Milchleitungsabschnitt, insbesondere durch Abziehen entnehmbar ist. Eine entnehmbare Anordnung des Ventilkörpers kann dadurch realisiert werden, dass der Ventilkörper in einer Aufnahme aufgenommen ist, mit welcher er dichtend zusammenwirkt und innerhalb welcher er rotierbar angeordnet ist.

Entsprechende Ringdichtungen können in der Aufnahme und/oder am Ventilkörper vorgesehen sein, insbesondere zur Abdichtung in radialer Richtung. Alternativ ist es denkbar, dass der Ventilkörper selbst eine Aufnahme aufweist und hiermit auf einen festen Anschlusszapfen aufgeschoben ist und mit diesem dann in radialer Richtung nach innen dichtend zusammenwirkt, beispielsweise durch mindestens eine am Außenumfang des Anschlusszapfens vorgesehene Dichtung und/oder durch eine am Innenumfang des Ventilkörpers vorgesehene Dichtung. Bevorzugt ist der Ventilkörper jedenfalls aus der Aufnahme bzw. von dem Anschlusszapfen durch Abziehen lösbar, insbesondere in Richtung der Längserstreckung und/oder in Richtung der Hauptströmungsrichtung der Milch durch den Hauptleitungsabschnitt.

Insbesondere für den Fall der Realisierung eines, insbesondere lösbar in einer Aufnahme gehaltenen Ventilkörpers ist es bevorzugt, wenn der Bypassleitungsabschnitt in dem die Aufnahme ausbildenden Körper realisiert ist - besonders bevorzugt ist es, wenn der Bypassleitungsabschnitt als am Innenumfang der Aufnahme vorgesehene sich in Strömungsrichtung der Milch erstreckende Nut (Innenumfangsnut) ausgebildet ist, die bei entsprechender Drehstellung des Ventilkörpers fluidleitend, insbesondere über einen im Ventilkörper vorgesehenen Verbindungskanal mit dem Versorgungsleitungsabschnitt verbunden ist.

Bevorzugt sind für den Fall der Realisierung eines auf einen Anschlusszapfen aufschiebbaren Ventilkörpers sowohl der Hauptleitungsabschnitt als auch der Bypassleitungsabschnitt in dem Ventilkörper ausgebildet, bevorzugt durch Ausbildung entsprechender Kanäle im Ventilkörper.

Insbesondere dann, wenn der Bypassleitungsabschnitt in dem Ventilkörper vorgesehen ist, wird bevorzugt durch Verstellen, insbesondere Rotieren, des Ventilkörpers eine fluidleitende Verbindung zwischen den Bypassleitungsabschnitt und dem Erwärmungs- und/oder Aufschäummitteln hergestellt oder unterbrochen. Gemäß einer bevorzugten Ausführungsvariante wird ein entsprechender Durchflussquerschnitt stufenlos oder gestuft verändert. Bevorzugt erfolgt die fluidleitende Verbindung des Bypassleitungsabschnittes mit den Erwärmungs- und/oder Aufschäummitteln durch die Herstellung einer fluidleitenden Verbindung zwischen den Bypassleitungsabschnitt und den Erwärmungs- und/oder Aufschäummitteln durch eine fluidleitende Verbindung des Bypassleitungsabschnittes mit einem gemeinsamen Leitungsabschnitt der Milchleitung, durch den der Gesamtmilchvolumenstrom nach Passieren des Ventils fließt.

Konstruktiv besonders vorteilhaft ist eine Ausführungsform, bei der eine Gabelung zur fluidleitenden Verbindung sowohl des Bypassleitungsabschnittes als auch des Hauptleitungsabschnittes mit dem Versorgungsleitungsabschnitt in dem Ventilkörper ausgebildet ist. Dabei ist es besonders bevorzugt, wenn der Bypassleitungsabschnitt über eine in radialer Richtung verlaufende Öffnung im Ventilkörper mit Milch versorgbar ist, wobei sich die Relativposition dieses Kanals zum Bypassleitungsabschnitt durch Verdrehen des Ventilkörpers relativ zu dem Bypassleitungsabschnitt verändern lässt.

Ganz besonders bevorzugt ist es, wenn ein zuvor erläuterter Verengungsabschnitt des Hauptleitungsabschnittes in dem Ventilkörper ausgebildet ist. Ganz besonders bevorzugt ist es, wenn der gesamte Hauptleitungsabschnitt in dem Ventilkörper realisiert ist und der Bypassleitungsabschnitt und der Hauptleitungsabschnitt unmittelbar nah in Strömungsrichtung nach dem Ventilkörper in einem gemeinsamen Leitungsabschnitt zusammentreffen.

Besonders zweckmäßig ist eine Ausführungsform, bei der der Ventilkörper gleichzeitig die Funktion als Milchschlauchanschlussadapter aufweist, in dem der Ventilkörper entweder Mittel zum lösbaren Festlegen eines flexiblen Milchschlauchs, insbesondere einen entsprechenden, weiter bevorzugt endseitigen Anschlussstutzen aufweist oder alternativ dauerhaft mit dem Milchschlauch verbunden ist. Ganz besonders bevorzugt ist eine Ausführungsform der Vorrichtung, bei der ein flexibler Milchschlauch lösbar oder alternativ dauerhaft fest mit dem Ventilkörper verbunden und der flexible Milchschlauch somit Bestandteil der Vorrichtung ist.

Gemäß einer besonders bevorzugten, konstruktiv einfachen Lösung ist der Milchschlauch zusammen mit dem Ventilkörper bei Rotieren des Ventilkörpers um eine Achse rotierbar.

Besonders bevorzugt ist es, wenn die Aufschäum- und/oder Erwärmungsmittel einen Dampfanschluss zum Anschluss an eine Dampfleitung der Getränkezubereitungsvorrichtung aufweisen, sowie eine Unterdruckkammer, welche noch weiter bevorzugt gleichzeitig eine Aufschäumkammer bildet, wobei in der Unterdruckkammer mittels einer Venturi-Düse bei durch den Dampfanschluss strömendem Dampf Unterdruck erzeugbar ist, um somit Milch durch die abschnittsweise von mindestens zwei Parallelabschnitten gebildete Milchleitung ansaugen zu können.

Im Hinblick auf eine konstruktiv besonders einfache Lösung ist es bevorzugt, wenn mittels des Ventils ausschließlich der Milchvolumenstrom und nicht gleichzeitig, wie dies bei Stand-der-Technik-Ausführungen teilweise der Fall ist, auch Luftvolumenstrom einstellbar ist.

Die Erfindung führt auch auf eine Getränkezubereitungsvorrichtung, welche vorzugsweise als eine Kaffeemaschine, beispielsweise eine Portionsmaschine zur Verarbeitung von Getränkesubstratportionen, insbesondere Kaffeekapseln oder Kaffeevollautomat ausgebildet ist, wobei die Getränkezubereitungsvorrichtung eine Brüheinheit zum Auslaugen oder je nach Ausgestaltung des Getränkesubstrates zum Auflösen eines Getränkesubstrates aufweist, insbesondere zum Auslaugen von Kaffeemehl und zudem eine nach dem Konzept der Erfindung ausgebildete Milcherwärmungs- und/oder Milchaufschäumvorrichtung aufweist.

Bevorzugt ist Letztere mit einem Dampferzeuger der Getränkezubereitungsvorrichtung zum Erzeugen von Unterdruck in einer Unterdruckkammer der Milcherwärmungs- und/oder Aufschäumvorrichtung verbunden. Bevorzugt ist die Luftzufuhr mittels eines Ventils, bevorzugt eines Mehrwegeventils der Getränkezubereitungsvorrichtung ein- und ausschaltbar, um im ersten Fall lediglich Milch zu erwärmen und im zweiten Fall Milchschaum erzeugen zu können.

Weitere Vorteile, Merkmale und Einzelheiten der Erfindung ergeben sich aus den der nachfolgenden Beschreibung bevorzugten Ausführungsbeispielen sowie anhand der Zeichnungen.

Diese zeigen in:
- Fig. 1: eine stark schematisiert dargestellte Getränkezubereitungsvorrichtung mit einer daran vorgesehenen Milcherwärmungs- und/oder Milchaufschäumvorrichtung,
- Fig. 2: eine Schnittansicht durch die Milcherwärmungs- und/oder Milchaufschäumvorrichtung gemäß Fig. 1,
- Fig. 3: einen Schaltzustand, bei welchem ein Bypassleitungskanal mit einem Versorgungskanal fluidleitend zur Milchdurchleitung verbunden ist,
- Fig. 4: einen alternativen Schaltzustand, bei dem die fluidleitende Verbindung unterbrochen ist und,
- Fig. 5: stark schematisiert eine alternative Ausführungsform eines Bypassventils einer Milcherwärmungs- und/oder Milchaufschäumvorrichtung.

In den Figuren sind gleiche Elemente und Elemente mit dem gleichen Bezugszeichen gekennzeichnet.

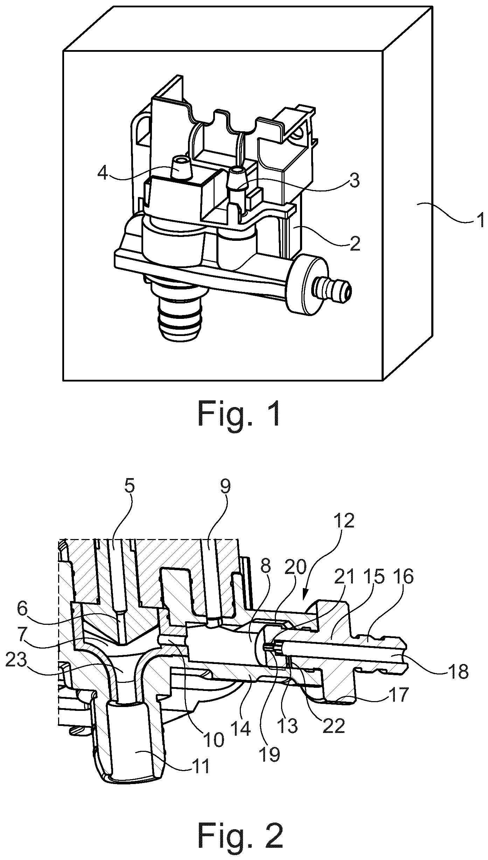

In Fig. 1 ist eine beispielsweise als Kaffeemaschine ausgebildete Getränkezubereitungsvorrichtung 1 gezeigt. Diese umfasst eine Milcherwärmungs- und/oder Milchaufschäumvorrichtung 2. Letztere umfasst einen Luftanschluss 3 zum Anschließen an eine Luftversorgungsleitung der Getränkezubereitungsvorrichtung 1 zum Vermischen angesaugter Milch mit Luft zum Zwecke der Herstellung von Milchschaum. Ferner umfasst die Milcherwärmungs- und/oder Milchaufschäumvorrichtung 2 einen Dampfanschluss 4 zum Verbinden mit Dampferzeugungsmitteln der Getränkezubereitungsvorrichtung 1.

In Fig. 2 ist eine Schnittansicht der Vorrichtung 2 gemäß Fig. 1 gezeigt.

Zu erkennen ist ein Dampfkanal 5, welcher über den Dampfanschluss 4 (vgl. Fig. 1) mit Dampf von Dampferzeugungsmitteln versorgt wird. Der Dampf wird durch eine Venturi-Düse 6 gefördert, wodurch in einer Unterdruckkammer 7, die gleichzeitig eine Milcherwärmungs- und/oder Aufschäumkammer bildet, Unterdruck erzeugt. Aufgrund des Unterdrucks wird Milch durch eine Milchleitung 8 angesaugt. In diese mündet eine Luftleitung 9, die über den Luftanschluss 3 mit Luft versorgt wird. Die Luft wird in die angesaugte Milch eingespeist.

Wie in Fig. 2 zu erkennen ist, mündet die Milchleitung 8 über eine Drossel 10 in die Unterdruckkammer 7 und gelangt aus dieser über einen Auslass 11 in Richtung Getränkebehältnis.

In der Milchleitung 8 ist ein als Bypassventil ausgebildetes Ventil 12 vorgesehen. Dieses umfasst einen in einer ortsfesten Aufnahme 13 eingeschobenen Ventilkörper 15. Die Aufnahme ist in einen Körper 14 ausgebildet, der auch abschnittsweise die Milchleitung 8 begrenzt. Der einteilige, hier als Kunststoffspritzgussteil ausgebildete Ventilkörper 15 wird von einem Milchschlauchanschlussadapter gebildet, der endseitig einen Anschlussstutzen 16 zum lösbaren Festlegen eines nicht gezeigten, flexiblen Milchschlauches aufweist.

Der Ventilkörper 15 ist um seine Längsachse rotierbar und zwar in dem gezeigten Ausführungsbeispiel manuell durch Aufbringen eines Drehmomentes auf eine sich in Umfangsrichtung erstreckende Grifffläche 17.

Die Milchleitung 8 setzt sich in dem Ventilkörper 15 fort und umfasst einen Versorgungsleitungsabschnitt 18, welcher mittels des nicht gezeigten Milchschlauches bei angeschlossenem Milchschlauch verlängert ist. Über den Versorgungsleitungsabschnitt 18 strömt Milch in Richtung Unterdruckkammer 7, wobei der Milch nach Passieren des Ventils 12 Luft über den Luftkanal 9 beigemischt wird.

Der Versorgungsleitungsabschnitt 18 teilt sich auf in einen Hauptleitungsabschnitt 19 und einen dazu parallelen, körperseitigen Bypassleitungsabschnitt 20.

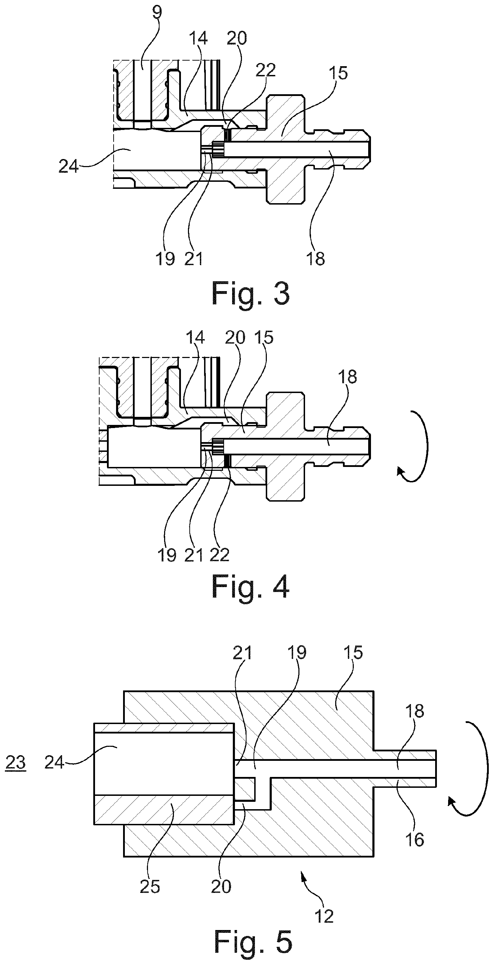

Wie sich aus Fig. 2 ergibt, ist der Hauptleitungsabschnitt 19 dauerhaft geöffnet, während, wie später noch anhand der Fig. 3 und 4 erläutert werden wird, der Bypassleitungsabschnitt 20 bei Bedarf zur Vergrößerung des Gesamtmilch-Volumenstroms zu- und abschaltbar ist und zwar durch Rotieren des Ventilkörpers 15.

Wie sich aus Fig. 2 ergibt, weist der Hauptleitungsabschnitt 19 einen Verengungsabschnitt 21 auf, dessen freie Querschnittsfläche geringer ist als die des Versorgungsleitungsabschnittes 18. Der Hauptleitungsabschnitt 19 setzt den Versorgungsleitungsabschnitt 18 geradlinig fort.

Innerhalb des Ventilkörpers 15 zweigt in Strömungsrichtung hinter dem Verengungsabschnitt 21 ein als Radialkanal ausgebildeter Verbindungskanal 22 ab, durch welchen der Bypassleitungsabschnitt 20 fluidleitend mit dem Versorgungsleitungsabschnitt 18 verbindbar und auch wieder von diesem trennbar ist.
Der als Milchschlauchanschlussadapter ausgebildete Ventilkörper 15 sitzt lösbar und in radialer Richtung gedichtet innerhalb der Aufnahme 13 und ist innerhalb dieser rotierbar angeordnet und zwar zwischen der in Fig. 3 gezeigten Öffnungsstellung, in welcher der Verbindungskanal 22 eine fluidleitende Verbindung zwischen dem am Innenumfang des Körpers 14 vorgesehen Bypassleitungsabschnittes 20 und dem Versorgungsleitungsabschnitt 18 herstellt und der in Fig. 4 gezeigten Schließposition, in welcher der Ventilkörper 15, hier beispielhaft um 180°, relativ zu der in Fig. 3 gezeigten Stellung verdreht ist. In dieser Schließstellung endet der Verbindungskanal 22 unmittelbar am Innenumfang des Körpers 14, sodass keine Milch durch den Verbindungskanal 22 in den Bypassleitungsabschnitt 20 strömen kann. Mit Letzterem wird der Hauptleitungsabschnitt 19 und dort insbesondere der Verengungsabschnitt 21 gebypasst.

Zum Ansaugen bzw. Fördern eines maximalen Milchvolumenstroms wird Ventilkörper 15 in die in Fig. 3 gezeigte Öffnungsposition verdreht, sodass die über den Versorgungsleitungsabschnitt 18 angesaugte Milch in Richtung der in Fig. 2 gezeigte Aufschäum- und/oder Erwärmungsmittel 23 strömen kann. Wird eine höher temperierte Milch benötigt, wird der Ventilkörper 15 in die in Fig. 4 gezeigte Position verdreht, sodass Milch aus dem Versorgungsleitungsabschnitt 18 ausschließlich über den Hauptleitungsabschnitt 21 in Richtung der Aufschäum- und/oder Erwärmungsmittel 23 strömen kann.

Wie sich aus den zu Fig. 3 und 4 ergibt, sind der Hauptleitungskanal und der Bypassleitungskanal nach Passieren des Ventilkörpers 15 wieder zusammengeführt, sodass die Milch über einen gemeinsamen Leitungsabschnitt 24 mit Drossel 10 in die Unterdruckkammer 7 der Aufschäum- und/oder Erwärmungsmittel 23 strömen kann. In diesen gemeinsamen Leitungsabschnitt 24 mündet auch der Luftkanal 9.

Zum Reinigen kann der Ventilkörper 15 mit noch daran befindlichem flexiblem Milchschlauch aus der Aufnahme 13 in Richtung der Längserstreckung des Ventilkörpers 15 gezogen werden. Hierbei wird der Reibungswiderstand von entsprechenden radialen Ringdichtungen überwunden.

In Fig. 5 ist eine alternative Ausführungsform des Ventils 12 gezeigt. Im Unterschied zu dem Ausführungsbeispiel gemäß den Fig. 1 bis 4 ist hier der Ventilkörper 15 nicht in einer Aufnahme eingeschoben, sondern auf einen Anschlusszapfen 25 aufgeschoben. In diesem ist ein gemeinsamer Leitungsabschnitt 24 ausgebildet, in dem ein im Ventilkörper 15 vorgesehener Hauptleitungsabschnitt 19, der dauerhaft geöffnet ist, mündet. Je nach Drehstellung des Ventilkörpers um seine Längsachse ist ein ebenfalls im Ventilkörper 15 vorgesehener Bypassleitungsabschnitt 20 zusätzlich fluidleitend mit dem gemeinsamen Leitungsabschnitt 24 verbunden oder, wie in der Schaltstellung gemäß Fig. 5 gezeigt, nicht. In der gezeigten Schaltstellung fließt Milch aus einem Versorgungsleitungsabschnitt 18 ausschließlich über den Hauptleitungsabschnitt 19 in den gemeinsamen Leitungsabschnitt 24 und in diesem weiter zu den nicht näher dargestellten Aufschäum- und/oder Erwärmungsmitteln 23.

Auch bei dem Ausführungsbeispiel gemäß Fig. 5 ist der von dem Anschlusszapfen 25 axial abziehbare Ventilkörper 15 als Milchschlauchanschlussadapter mit Anschlussstutzen 16 zum lösbaren Aufschieben eines flexiblen Milchschlauchs ausgebildet.

Aus Übersichtlichkeitsgründen sind Ringdichtungen zur Abdichtung des Ventilkörpers 15 in radialer Richtung gegenüber dem Anschlusszapfen 25 nicht gezeigt.

Neben den gezeigten Ausführungsbeispielen sind alternative Varianten im Rahmen des Schutzumfangs der Ansprüche realisierbar.
Wesentlich ist die abschnittsweise Unterteilung der Milchleitung in einen Hauptleitungsabschnitt und ein Bypassleitungsabschnitt, wobei mittels des Ventils der Durchfluss bzw. der Volumenstrom durch den Bypassleitungsabschnitt einstellbar ist, wobei nicht zwingend jedoch bevorzugt der Hauptleitungsabschnitt dauerhaft geöffnet ist.

### Bezugszeichenliste

- 1: Getränkezubereitungsvorrichtung
- 2: Milcherwärmungs- und/oder Milchaufschäumvorrichtung
- 3: Luftanschluss
- 4: Dampfanschluss
- 5: Dampfkanal/Dampfleitung
- 6: Venturi-Düse
- 7: Unterdruckkammer
- 8: Milchleitung
- 9: Luftleitung/Luftkanal
- 10: Drossel
- 11: Auslass
- 12: Ventil
- 13: Aufnahme
- 14: Körper
- 15: Ventilkörper
- 16: Anschlussstutzen für flexiblen Milchschlauch
- 17: Grifffläche
- 18: Versorgungsleitungsabschnitt
- 19: Hauptleitungsabschnitt
- 20: Bypassleitungsabschnitt
- 21: Verengungsabschnitt
- 22: Verbindungskanal
- 23: Aufschäum- und/oder Erwärmungsmittel
- 24: gemeinsamer Leitungsabschnitt
- 25: Anschlusszapfen

## Patentansprüche

1. Milcherwärmungs- und/oder Milchaufschäumvorrichtung (2) zum Betreiben mit einer Getränkezubereitungsvorrichtung (1), insbesondere mit einer Kaffeemaschine, umfassend eine Milchleitung (8) zum Fördern von zu erwärmender und/oder aufzuschäumender Milch zu Aufschäum- und/oder Erwärmungsmitteln (23) der Vorrichtung (2), wobei der Milchleitung (8) ein einen verstellbaren Ventilkörper (15) aufweisendes Ventil (12) zur Einstellung des Durchflussvolumenstroms zugeordnet ist, wobei der Ventilkörper (15) eine Grifffläche (17) zum manuellen Verstellen, vorzugsweise durch Verdrehen um seine Längsachse, aufweist und/oder mit einem elektromotorischen Antrieb zum automatischen Verstellen des Ventilkörpers (15), vorzugsweise durch Verdrehen um seine Längsachse, gekoppelt oder mit einem solchen Antrieb der Getränkezubereitungsvorrichtung (1) koppelbar ist,
**dadurch gekennzeichnet,**
**dass** die Milchleitung (8) zumindest abschnittsweise unterteilt ist in einen Hauptleitungsabschnitt (19) und einen Bypassleitungsabschnitt (20) zum Bypassen des Hauptleitungsabschnittes (19), und dass der Bypassleitungsabschnitt fluidmäßig parallel zum Hauptleitungsabschnitt angeordnet ist, und dass das Ventil (12) dem Bypassleitungsabschnitt (20) zugeordnet ist, derart, dass mit diesem durch manuelles oder elektromotorisches Verstellen des Ventilkörpers (15) der Durchflussvolumenstrom durch den Bypassleitungsabschnitt (20) zur Einstellung eines Volumenstromverhältnisses zwischen einem durch den Bypassleitungsabschnitt (20) strömenden Teil-Milchvolumenstrom und einem durch den Hauptleitungsabschnitt (19) fließenden Teil-Milchvolumenstrom einstellbar ist, und dass beide Teil-/Milchvolumenströme entweder separat voneinander oder wiederum zusammengeführt als Gesamtmilchvolumenstrom zu den Aufschäum- und/oder Erwärmungsmitteln geführt sind.

2. Vorrichtung nach Anspruch 1
**dadurch gekennzeichnet,**
**dass** entweder der Bypassleitungsabschnitt (20) und der Hauptleitungsabschnitt (19) in Strömungsrichtung der Milch durch die Milchleitung (8) vor den Aufschäum- und/oder Erwärmungsmitteln (23) wieder zu einem gemeinsamen Leitungsabschnitt (24) zusammengeführt sind, oder dass der Bypassleitungsabschnitt (20) und der Hauptleitungsabschnitt (19) jeweils in die Aufschäum- und/oder Erwärmungsmittel (23) münden.

3. Vorrichtung nach einem der Ansprüche 1 oder 2,
**dadurch gekennzeichnet,**
**dass** die Milchleitung (8) einen Versorgungsleitungsabschnitt (18) aufweist, der sich in Strömungsrichtung der Milch in den Hauptleitungsabschnitt (19) und den Bypassleitungsabschnitt (20) gabelt.

4. Vorrichtung nach einem der Ansprüche 1 bis 3,
**dadurch gekennzeichnet,**
**dass** der Hauptleitungsabschnitt (19) dauerhaft geöffnet und/oder dass der Hauptleitungsquerschnitt nicht durch Betätigen des Ventils (12) schließbar und/oder durchflussquerschnittsveränderbar ist.

5. Vorrichtung nach einem der Ansprüche 3 oder 4,
**dadurch gekennzeichnet,**
**dass** der Strömungsquerschnitt des Hauptleitungsabschnittes (19), insbesondere an einem von dem Bypassleitungsabschnitt (20) bygepassten Verengungsabschnitt (21), enger ist als der Strömungsquerschnitt des Versorgungsleitungsabschnittes (18) an seiner engsten Stelle.

6. Vorrichtung nach einem der Ansprüche 3 bis 5,
**dadurch gekennzeichnet,**
**dass** durch Verstellen, insbesondere rotieren, noch weiter bevorzugt um seine Längsachse rotieren, des abschnittsweise die Milchleitung (8), insbesondere deren Versorgungsleitungsabschnitt (18), begrenzenden Ventilkörpers (15) der Bypassleitungsabschnitt (20) fluidleitend mit dem Versorgungsleitungsabschnitt (18) oder den Erwärmungs- und/oder Aufschäummitteln (23) verbindbar und/oder ein Durchflussquerschnitt zur Versorgung des Bypassleitungsabschnittes (20) mit Milch aus dem Versorgungsleitungsabschnitt (18) oder zur Versorgung des Erwärmungs- und/oder Aufschäummittel (23) mit Milch aus dem Bypassleitungsabschnitt (20) stufenlos oder gestuft einstellbar ist.

7. Vorrichtung nach einem der vorhergehenden Ansprüche,
**dadurch gekennzeichnet,**
**dass** der Ventilkörper (15) lösbar in einer Aufnahme (13) aufgenommen oder auf einen Anschlusszapfen (25) aufgeschoben ist.

8. Vorrichtung nach einem der vorhergehenden Ansprüche,
**dadurch gekennzeichnet,**
**dass** der Bypassleitungsabschnitt (20), zumindest abschnittsweise, von einem die Aufnahme (13) oder den Anschlusszapfen (25) für den Ventilkörper (15) ausbildenden Körper (14), insbesondere in Form eines Kanals oder einer Nut am Innenumfang der Aufnahme (13) oder als Kanal im Ventilkörper (15) gebildet ist.

9. Vorrichtung nach einem der vorhergehenden Ansprüche,
**dadurch gekennzeichnet,**
**dass** eine Gabelung zur fluidleitenden Verbindung des Bypassleitungsabschnittes (20) und des Hauptleitungsabschnittes (19) mit dem Versorgungsleitungsabschnittes (18) in dem Ventilkörper (15) ausgebildet ist.

10. Vorrichtung nach Anspruch 5,
**dadurch gekennzeichnet,**
**dass** der Verengungsabschnitt (21) des Hauptleitungsabschnitts (19) in dem Ventilkörper (15) ausgebildet ist.

11. Vorrichtung nach einem der vorhergehenden Ansprüche,
**dadurch gekennzeichnet,**
**dass** durch manuelles oder elektromagnetisches Verstellen des Ventilkörpers (15) des, bevorzugt nicht als Rückschlagventil ausgebildeten, Ventils, mehr als drei, bevorzugt mehr als vier unterschiedliche Volumenstromverhältnisse einstellbar sind.

12. Vorrichtung nach einem der vorhergehenden Ansprüche,
**dadurch gekennzeichnet,**
**dass** der Ventilkörper (15) von einem, vorzugsweise lösbar in einer Aufnahme (13) oder auf einen Anschlusszapfen (25) aufgeschobenen festgelegten, Milchschlauchanschlussadapter zum lösbaren Festlegen eines flexiblen Milchschlauches und/oder mit daran flexiblem Milchschlauch gebildet ist.

13. Vorrichtung nach einem der vorhergehenden Ansprüche,
**dadurch gekennzeichnet,**
**dass** die Aufschäum- und/oder Erwärmungsmittel (23) einen Dampfanschluss (4) zum Anschluss einer Dampfleitung (5) der Getränkezubereitungsvorrichtung (1) aufweisen sowie eine Unterdruckkammer (7) in der mittels einer Venturi-Düse (6) bei durch den Dampfanschluss (4) strömenden Dampf Unterdruck erzeugbar ist, wobei bevorzugt der gemeinsame Leitungsabschnitt (24) oder alternativ der Hauptleitungsabschnitt (19) sowie der Bypassleitungsabschnitt (20) in die Unterdruckkammer (7) münden.

14. Vorrichtung nach einem der vorhergehenden Ansprüche,
**dadurch gekennzeichnet,**
**dass** das Ventil (12) in Förderrichtung der Milch vor einer Lufteinleitstelle in die Milchleitung (8) angeordnet ist.

15. Getränkezubereitungsvorrichtung (1), insbesondere Kaffeemaschine, mit einer Brüheinheit zum Auslaugen oder Auflösen eines Getränkesubstrates, insbesondere von Kaffeemehl, und einer Vorrichtung nach einem der vorhergehenden Ansprüche, vorzugsweise aufweisend dampfleitend mit den Aufschäum- und/oder Erwärmungsmitteln (23) verbundene Dampferzeugungsmittel.

## Claims

1. A milk heating and/or milk foaming device (2) to be operated with a beverage preparation device (1), in particular with a coffee machine, comprising a milk tube (8) for transporting milk that is to be heated and/or to be foamed to foaming and/or heating means (23) of the device (2), a valve (12) comprising an adjustable valve body (15) being assigned to the milk tube (8) for adjusting the volume flow, the valve body (15) comprising a grip surface (17) for manually adjusting, preferably by rotating the valve body (15) about its longitudinal axis, and/or being coupled with an electromotive drive for the automatic adjustment of the valve body (15), preferably by rotating the valve body (15) about its longitudinal axis, or being coupleable with an electromotive drive of the beverage preparation device (1),
**characterized in that**
the milk tube (8) is divided, at least in sections, into a main tube section (19) and a bypass tube section (20) for bypassing the main tube section (19), and **in that** the bypass tube section is arranged in parallel to the main tube with regard to the fluid transport, and **in that** the valve (12) is assigned to the bypass tube section (20), such that the volume flow passing through the bypass tube section (20) is adjustable by means of the valve (12), said adjustment of the valve body (15) being carried out manually or by means of the electromotive drive, in order to adjust a volume flow ratio between a partial milk volume flow passing through the bypass tube section (20) and a partial milk volume flow passing through the main tube section (19), and that both partial milk volume flows are conducted either separately to the foaming and/or heating means or are combined as a total milk volume flow.

2. The device according to claim 1,
**characterized in that**
the bypass tube section (20) and the main tube section (19) are either combined again to form a joint tube section (24) in the direction of the milk flowing through the milk tube (8) upstream of the foaming and/or heating means (23), or **in that** the bypass tube section (20) and the main tube section (19) each open into the foaming and/or heating means (23) separately.

3. The device according to one of the claims 1 or 2,
**characterized in that**
the milk tube (8) comprises a supply tube section (18), which bifurcates in the milk flow direction into the main tube section (19) and the bypass tube section (20).

4. The device according to one of the claims 1 to 3,
**characterized in that**
the main tube section (19) is open permanently and/or **in that** the cross-section of the main tube cannot be closed and/or is not adjustable in terms of the flow volume by adjusting the valve (12).

5. The device according to one of the claims 3 or 4,
**characterized in that**
the flow cross-section of the main tube section (19) is narrower than the flow cross-section of the supply tube section (18) in its narrowest portion, in particular in a constricted portion (21) bypassed by the bypass tube section (20).

6. The device according to one of the claims 3 to 5,
**characterized in that**
the bypass tube section (20) is connectable to the supply tube section (18) or to the heating and/or foaming means (23) in a fluid-conducting manner by adjusting the valve body (15), in particular by rotating the valve body (15), more preferably by rotating the valve body (15) about its longitudinal axis, said valve body (15) limiting the milk tube (8), in particular its supply tube section (18), and/or a flow cross-section is adjustable continuously or stepwise for supplying the bypass tube section (20) with milk from the supply tube section (18) or for supplying the heating and/or foaming means (23) with milk from the bypass tube section (20).

7. The device according to one of the preceding claims,
**characterized in that**
the valve body (15) is held detachably in a holding fixture (13) or is slid onto a connection pin (25).

8. The device according to one of the preceding claims,
**characterized in that**
the bypass tube section (20) is formed, at least in sections, by a body (14) constituting the holding fixture (13) or the connection pin (25) for the valve body (15), in particular in the form of a channel or groove on the inner circumference of the holding fixture (13) or as a channel in the valve body (15).

9. The device according to one of the preceding claims,
**characterized in that**
a bifurcation for a fluid-conducting connection of the bypass tube section (20) and the main tube section (19) with the supply tube section (18) is formed in the valve body (15).

10. The device according to claim 5,
**characterized in that**
the constricted portion (21) of the main tube section (19) is formed in the valve body (15).

11. The device according to one of the preceding claims,
**characterized in that**
more than three, preferably more than four, different volume flow ratios are adjustable by manual or electromagnetic adjustment of the valve body (15) of the valve, said valve preferably not being configured as a one-way valve.

12. The device according to one of the preceding claims,
**characterized in that**
the valve body (15) is formed by a fixed milk tube connection adapter for detachably attaching a flexible milk tube and/or comprising a flexible milk tube, said milk tube connection adapter preferably being attached in a detachable manner in a holding fixture (13) or being slid onto a connection pin (25).

13. The device according to one of the preceding claims,
**characterized in that**
the foaming and/or heating means (23) comprise a steam connection (4) for connecting a steam tube (5) of the beverage preparation device (1) as well as a vacuum chamber (7), in which a vacuum can be generated by means of steam flowing through the steam connection (4) via a Venturi nozzle (6), preferably the joint tube section (24) opening into the vacuum chamber (7) or, alternatively, the main tube section (19) and the bypass tube section (20) opening into the vacuum chamber (7).

14. The device according to one of the preceding claims,
**characterized in that**
the valve (12) is located in the milk flow direction upstream of an air inlet section introducing air into the milk tube (8).

15. A beverage preparation device (1), in particular a coffee machine, comprising a brewing unit for leaching or dissolving a beverage substrate, in particular coffee grounds, and a device according to one of the preceding claims, preferably comprising steam generating means in a steam-conducting connection to the foaming and/or heating means (23).

## Revendications

1. Dispositif d'échauffement de lait et/ou de moussage de lait (2) pour fonctionner avec un dispositif de préparation de boissons (1), en particulier avec une cafetière, comprenant un tuyau à lait (8) pour convoyer du lait à échauffer et/ou à faire mousser vers des moyens de moussage et/ou d'échauffement (23) du dispositif (2), une soupape (12) comprenant un corps de soupape (15) ajustable étant associée audit tuyau à lait (8) pour le réglage du courant volumique de débit, ledit corps de soupape (15) comprenant une surface de préhension (17) pour l'ajustage manuel, de préférence par rotation autour de son axe longitudinal, et/ou étant couplé avec un entraînement électromoteur pour l'ajustage automatique du corps de soupape (15), de préférence par rotation autour de son axe longitudinal, ou pouvant être couplé avec un tel entraînement du dispositif de préparation de boissons (1),
**caractérisé en ce que**
le tuyau à lait (8) est divisé, au moins en partie, en une section de tuyau principale (19) et une section de tuyau de contournement (20) pour contourner la section de tuyau principale (19) et que la section de tuyau de contournement est disposée, de manière fluidique, parallèlement à la section de tuyau principale et que la soupape (12) est associée à la section de tuyau de contournement (20), de telle manière qu'au moyen de ladite soupape (12) le courant volumique de débit à travers la section de tuyau de contournement (20) peut être réglé par l'ajustage manuel ou électromoteur du corps de soupape (15) pour le réglage d'un rapport de débit entre un courant volumique de lait partiel coulant à travers la section de tuyau de contournement (20) et un courant volumique de lait partiel coulant à travers la section de tuyau principale (19) et que les deux courants volumiques de lait partiels sont soit guidés séparément l'un de l'autre ou sont guidés après être réunis comme courant volumique de lait total vers les moyens de moussage et/ou d'échauffement.

2. Dispositif selon la revendication 1,
**caractérisé en ce que**
soit la section de tuyau de contournement (20) et la section de tuyau (19) principale sont réunies dans la direction du courant de lait à travers le tuyau à lait (8) pour former une section de tuyau (24) commune en amont des moyens de moussage et/ou d'échauffement (23), soit la section de tuyau de contournement (20) et la section de tuyau principale (19) respectivement débouchent dans les moyens de moussage et/ou d'échauffement (23).

3. Dispositif selon l'une quelconque des revendications 1 ou 2, **caractérisé en ce que**
le tuyau à lait (8) comprend une section de conduite d'alimentation (18) qui se ramifie en direction du courant de lait en la section de tuyau principale (19) et la section de tuyau de contournement (20).

4. Dispositif selon l'une quelconque des revendications 1 à 3, **caractérisé en ce que**
la section de tuyau principale (19) reste ouverte en permanence et/ou que la section transversale de la section de tuyau principale ne peut pas être fermée et/ou changée en section transversale de passage par activation de la soupape (12).

5. Dispositif selon l'une quelconque des revendications 3 ou 4, **caractérisé en ce que**
la section transversale d'écoulement de la section de tuyau principale (19) est plus étroite, en particulier dans une partie rétrécie (21) contournée par la section de tuyau de contournement (20), que la section transversale d'écoulement de la section de conduite d'alimentation (18) à l'endroit le plus étroit.

6. Dispositif selon l'une quelconque des revendications 3 à 5, **caractérisé en ce que**
la section de tuyau de contournement (20) peut être connectée à la section de conduite d'alimentation (18) en communication fluidique ou aux moyens de moussage et/ou d'échauffement (23) par l'ajustage, en particulier par rotation, encore plus préférentiellement par rotation autour de l'axe longitudinal, du corps de soupape (15) qui limite, en partie, le tuyau à lait (8), en particulier la section de conduite d'alimentation (18) dudit tuyau à lait, et/ou une section transversale de passage peut être ajustée en continu ou de manière graduelle pour l'alimentation de la section de tuyau de contournement (20) en lait provenant de la section de conduite d'alimentation (18) ou pour l'alimentation du moyen d'échauffement et/ou de moussage (23) en lait provenant de la section de tuyau de contournement (20).

7. Dispositif selon l'une quelconque des revendications précédentes, **caractérisé en ce que**
le corps de soupape (15) est reçu de façon amovible dans un logement (13) ou est glissé sur un tenon de raccordement (25).

8. Dispositif selon l'une quelconque des revendications précédentes, **caractérisé en ce que**
la section de tuyau de contournement (20) est réalisée, au moins en partie, par un corps (14) qui constitue le logement (13) ou le tenon de raccordement (25) pour le corps de soupape (15), en particulier sous forme d'un canal ou d'une rainure dans la circonférence intérieure du logement (13) ou comme canal dans le corps de soupape (15).

9. Dispositif selon l'une quelconque des revendications précédentes, **caractérisé en ce qu'**
une bifurcation pour la communication fluidique de la section de tuyau de contournement (20) et la section de tuyau principale (19) avec la section de conduite d'alimentation (18) est réalisée dans le corps de soupape (15).

10. Dispositif selon la revendication 5,
**caractérisé en ce que**
le partie rétrécie (21) de la section de tuyau principale (19) est réalisée dans le corps de soupape (15).

11. Dispositif selon l'une quelconque des revendications précédentes, **caractérisé en ce que**
plus que trois, de préférence plus que quatre, rapports de courant volumique de débit différents peuvent être réglés par l'ajustage manuel ou électromagnétique du corps de soupape (15) de la soupape qui de préférence n'est pas réalisée comme clapet anti-retour.

12. Dispositif selon l'une quelconque des revendications précédentes, **caractérisé en ce que**
le corps de soupape (15) est réalisé par un adaptateur de raccordement de tuyau à lait qui est fixé de préférence de manière amovible dans un logement (13) ou est glissé sur un tenon de raccordement (25) pour fixer de manière amovible un tuyau à lait flexible et/ou ayant un tuyau à lait flexible.

13. Dispositif selon l'une quelconque des revendications précédentes, **caractérisé en ce que**
les moyens de moussage et/ou d'échauffement (23) comprennent une connexion à vapeur (4) pour la connexion d'une conduite de vapeur (5) du dispositif de préparation de boissons (1) de même qu'une chambre de dépression (7) dans laquelle la dépression peut être produite en utilisant un tube de Venturi (6) quand la vapeur coule à travers la connexion à vapeur (4), de préférence la section de tuyau commune (24) ou alternativement la section de tuyau principale (19) de même que la section de tuyau de contournement (20) débouchant dans la chambre de dépression (7).

14. Dispositif selon l'une quelconque des revendications précédentes, **caractérisé en ce que**
la soupape (12) est disposée dans la direction de transport du lait en amont d'un endroit où de l'air peut être introduit dans le tuyau à lait (8).

15. Dispositif de préparation de boissons (1), en particulier une cafetière ayant une unité de breuvage pour lessiver ou dissoudre un substrat de boisson, particulièrement du café en poudre, et un dispositif selon l'une quelconque des revendications précédentes, comprenant de préférence des moyens de production de vapeur qui sont connectés avec les moyens de moussage et/ou de d'échauffement (23) en communication conductrice de vapeur.
